# EUROPÄISCHE PATENTSCHRIFT

(11) **EP 2 501 843 B1**
(45) Veröffentlichungstag und Bekanntmachung des Hinweises auf die Patenterteilung: **11.04.2018**
(21) Anmeldenummer: 10788233.4
(22) Anmeldetag: 28.10.2010
(51) Int. Cl.: C25C 3/14, F15B 15/28

(54) **KRUSTENBRECHVORRICHTUNG**
CRUST BREAKING DEVICE
DISPOSITIF DE RUPTURE DE CROÛTE

(30) Priorität: 21.11.2009 DE 102009052286
(43) Veröffentlichungstag der Anmeldung: 26.09.2012
(73) Patentinhaber: Aventics GmbH, 30880 Laatzen (DE)
(72) Erfinder: PALSSON, Peter, S-112 50 Stockholm (SE)
(74) Vertreter: Spahn, Tobias
(86) Internationale Anmeldenummer: PCT/EP2010/006606
(87) Internationale Veröffentlichungsnummer: WO 2011/060876

(56) Entgegenhaltungen:
- EP-A1- 1 013 943
- EP-A2- 1 820 974
- WO-A1-2008/095510
- DE-A1-102008 010 175
- US-B1- 6 436 270

## Beschreibung

Die vorliegende Erfindung betrifft eine Krustenbrechvorrichtung für Metallschmelzen, insbesondere für Aluminiumschmelzen, umfassend einen Pneumatikzylinder mit einem Zylindergehäuse, einen axial innerhalb des Zylindergehäuses verschiebbaren Kolben, eine Kolbenstange, die am Kolben befestigt und durch eine Öffnung an einem Ende des Zylindergehäuses hindurchgeführt ist, so dass die Kolbenstange durch axiale Verschiebung des Kolbens zwischen einer eingefahrenen Endstellung und einer ausgefahrenen Endstellung bewegbar ist. Die Vorrichtung umfasst des Weiteren eine elektronische Steuereinheit und eine Ventilanordnung, die über die elektronische Steuereinheit betätigbar und über Arbeitsleitungen mit einer vorderen Druckkammer und einer rückwärtigen Druckkammer innerhalb des Zylindergehäuses verbunden ist.

### Hintergrund der Erfindung

Krustenbrechvorrichtungen der vorstehend genannten Art werden üblicherweise in der Aluminiumindustrie bei der Herstellung von Aluminium eingesetzt. Während dieses Prozesses wird das Aluminium in einem beheizbaren Behälter gehalten, um eine Schmelze zu erzeugen. Dabei bildet sich auf der Oberfläche der Aluminiumschmelze eine Kruste aus. Um weiteres Aluminium und/oder Zusätze zur Schmelze zugeben zu können, muss die Kruste von Zeit zu Zeit aufgebrochen werden. Das Brechen der Kruste wird mittels einer Krustenbrechvorrichtung ausgeführt, die üblicherweise über dem Behälter installiert ist. Die Krustenbrechvorrichtung umfasst einen Pneumatikzylinder mit einer Kolbenstange, die an einem Kolben befestigt ist, welcher innerhalb des Zylinders axial verschiebbar angeordnet ist, um die Kolbenstange zwischen einer eingefahrenen Endstellung und einer ausgefahrenen Endstellung, wobei sie die Kruste durchstößt, zu bewegen. Um das Durchstoßen der Kruste zu vereinfachen, kann die Kolbenstange mit einem Brechwerkzeug, wie beispielsweise einem Meißel oder einer Spitzhacke, ausgestattet sein. Nach dem Brechen der Kruste kehrt die Kolbenstange in ihre eingefahrene Endstellung zurück.

Zur Betätigung der Krustenbrechvorrichtung wird die rückwärtige oder die vorderere Druckkammer des Pneumatikzylinders über eine Ventilanordnung, die mit einer Druckluftquelle verbunden ist, mit Druckluft befüllt, während die jeweils andere Druckkammer entlüftet wird. Der steigende Druck in der jeweiligen Druckkammer, die mit Druckluft befüllt wird, beaufschlagt den Kolben, so dass eine axiale Verschiebung des Kolbens bewirkt wird. Dementsprechend wird in Abhängigkeit von der Richtung der axialen Verschiebung des Kolbens die Kolbenstange ausgefahren oder eingefahren. Um die Richtung der axialen Verschiebung des Kolbens umschalten zu können, nachdem dieser eine Endstellung erreicht hat, ist die Ventilanordnung ferner mit einer Steuereinheit verbunden, welche die Position des Kolbens überwacht und in entsprechender Weise die Ventilanordnung betätigt.

Die Patentschrift US 6,436,270 offenbart ein Verfahren und eine Vorrichtung zur Steuerung der Bewegung eines Zuführ- und Brechmeißels in einer Aluminiumproduktionsanlage, wobei das Durchbrechen der Kruste mittels eines AC-Stromkreises erfasst wird, wenn der Meißel in Kontakt mit der Metallschmelze gelangt. Während des Betriebes herrscht ein Hochstrom und ein niedriger Gleichstrom zwischen einem als Kathode ausgebildeten Behälter, der die Aluminiumschmelze enthält, und einer Anode, so dass ein elektrischer Kontakt zwischen dem Meißel und dem Metallschmelze hergestellt wird, wenn der Meißel die Kruste durchbricht. Die Kruste agiert dabei als elektrischer Isolator, wobei ein elektrischer Kontakt solange verhindert wird, bis der Meißel die Schmelze erreicht hat. Nachdem der elektrische Kontakt erfasst wurde, schaltet die Steuereinheit die Druckluftzufuhr zum Zylinder um, was zur Folge hat, dass der Meißel sehr schnell aus der Schmelze herausgezogen wird, so dass kein wesentlicher Wärmeeintrag in den Meißel erfolgt. Dabei wird zugleich eine schädliche Aufwärmung des Zylinders auf ein Minimum reduziert, was wiederum geringere Kosten für Instandhaltung und Erneuerung zur Folge hat. Das offenbarte Verfahren und die offenbarte Vorrichtung ermöglichen zwar das Durchstoßen des Meißels durch die Kruste zu ermitteln, sie ermöglichen jedoch nicht, die tatsächliche Position des Meißels und demzufolge des Kolbens festzustellen, da der Füllstand der Schmelze und/oder die Dicke der Kruste variieren kann.

Die Offenlegungsschrift US 2009/0078110 offenbart ein pneumatisches Antriebssystem, dass eine axial verschiebbare Abtriebseinheit und Steuerventilmittel umfasst, welche mit Betätigungsmitteln ausgestattet sind, deren Betätigung in Abhängigkeit von der Position der Abtriebseinheit erfolgt. Die Betätigungsmittel werden betätigt, wenn die Abtriebseinheit eine Endstellung oder eine Position kurz davor erreicht hat, wobei die Steuerventilmittel in einen anderen Betriebsmodus geschaltet werden. Die den Steuerventilmitteln zugeordneten Betätigungsmittel sind vorzugsweise als mechanische Ansprechmittel ausgebildet, die direkt an oder in dem Antriebsgehäuse angeordnet sind. Sie umfassen zumindest ein verschiebbar gelagertes Stößelglied, das in den Hubweg der Abtriebseinheit hineinragt, so dass die Abtriebseinheit bei einer axialen Verschiebung zu einer Endstellung hin am Ansprechmittel anschlägt, wobei ein Schalten der Steuerventilmittel bewirkt wird. Es wird weiterhin vorgeschlagen, Ansprechmittel zu verwenden, deren Betätigung keinen Berührungskontakt mit der Abtriebseinheit erfordert, wie beispielsweise Reed-Schalter oder andere Positionssensoren. In diesem Fall erfolgt das Umschalten der Steuerventilmittel durch Einsatz eines elektrischen Signals. Die in diesem Dokument offenbarten Ansprechmittel umfassen jedoch Bauteile, wie beispielsweise ein verschiebbar gelagertes Stößelteil oder elektrisch betätigte Sensoren, die, insbesondere in rauen Umgebungen wie beispielsweise die Aluminiumindustrie, verschleiß- und/oder störanfällig sind.

Es ist eine Aufgabe der vorliegenden Erfindung, eine Krustenbrechvorrichtung der eingangs genannten Art zu schaffen, welche Positionserfassungsmittel umfasst, die weniger verschleiß- und/oder störanfällig sind. Die Aufgabe wird gelöst durch eine Krustenbrechvorrichtung mit den Merkmalen des Anspruchs 1. Bevorzugte Ausführungsformen der Erfindung sind in den auf Anspruch 1 rückbezogenen Ansprüchen beschrieben.

### Offenbarung der Erfindung

Erfindungsgemäß umfasst die Krustenbrechvorrichtung wenigstens eine Metallplatte, die ortsfest innerhalb des Zylindergehäuses angeordnet ist, um eine Endstellung des Kolbens bzw. der Kolbenstange zu definieren. Die Metallplatte und der Kolben sind an die Steuereinheit elektrisch angeschlossen, so dass ein Kontakt des Kolbens mit der Metallplatte einen Stromkreis schließt, welcher der Steuereinheit signalisiert, dass der Kolben bzw. die Kolbenstange die Endstellung erreicht hat. Nachdem durch die elektronische Steuereinheit das Einnehmen der Endstellung des Kolbens bzw. der Kolbenstange erfasst wurde, wird vorzugsweise die Ventilanordnung in einen anderen Betriebsmodus geschaltet. Stellt die Steuereinheit beispielsweise aufgrund des Kontaktes des Kolbens mit einer die vordere Druckkammer begrenzenden Metallplatte fest, dass der Kolben bzw. die Kolbenstange ihre vollständig ausgefahrene Stellung erreicht hat, wird die Ventilanordnung in einen Betriebsmodus geschaltet, in welchem der vorderen Druckkammer des Zylinders Druckluft zugeführt wird, während die rückwärtige Druckkammer entlüftet wird. Der steigende Druck in der vorderen Druckkammer beaufschlagt den Kolben, so dass eine axiale Verschiebung des Kolbens in die entgegengesetzte Richtung bewirkt wird, wobei die Kolbenstange wieder eingefahren wird. Die Metallplatte bildet demnach in Verbindung mit dem Kolben einen elektrischen Schalter aus, wobei die Metallplatte ein kostengünstiges und robustes Bauteil eines solchen Schalters darstellt, das für den Einsatz in rauen Umgebungen, insbesondere in rauen Umgebungen mit hohen Temperaturen, hervorragend geeignet ist. Dadurch, dass die Metallplatte ortsfest innerhalb des Zylindergehäuses angeordnet ist, umfasst der elektrische Schalter, der aus der Metallplatte und dem Kolben gebildet wird, neben dem Kolben selbst keine beweglichen Bauteile. Gleichwohl eine Berührung des Kolbens mit der Metallplatte erforderlich ist, um der Steuereinheit zu signalisieren, dass eine Endstellung erreicht wurde, ist die vorgeschlagene Anordnung äußerst zuverlässig und wenig verschleißanfällig.

Vorzugsweise umfasst die Krustenbrechvorrichtung ferner Leitungen zum direkten oder indirekten elektrischen Anschluss der Metallplatte und des Kolbens an die Steuereinheit und/oder zur Signalübertragung.

Gemäß einer bevorzugten Ausführungsform der Erfindung umfasst die Krustenbrechvorrichtung wenigstens eine Leitung zum direkten elektrischen Anschluss des Zylindergehäuses an die Steuereinheit und gewährleistet dabei den elektrischen Anschluss des Kolbens und/oder der Kolbenstange an die Steuereinheit. Dies wiederum bedeutet, dass der Kolben und/oder die Kolbenstange an das Zylindergehäuse elektrisch angeschlossen sind, beispielsweise durch Berührungskontakt des Kolbens und/oder der Kolbenstange mit dem Zylindergehäuse. Bei dieser konkreten Ausführungsform sind separate Leitungen zum elektrischen Anschließen des Kolbens und/oder der Kolbenstange entbehrlich, so dass die Montage der Vorrichtung vereinfacht wird. Weiterhin bevorzugt wird der Kontakt zwischen dem Kolben bzw. der Kolbenstange und dem Zylindergehäuse durch einen Schleifkontakt verwirklicht, der die Bewegung des Kolbens bzw. der Kolbenstange gegenüber dem Zylindergehäuse erleichtert.

Weiterhin bevorzugt ist die Metallplatte vom Zylindergehäuse elektrisch isoliert. Die elektrische Isolierung der Metallplatte vom Zylindergehäuse stellt sicher, dass kein Stromkreis geschlossen wird, bevor der Kolben in Berührungskontakt mit der Metallplatte gelangt.

Entsprechend einer bevorzugten Ausführungsform der Erfindung ist die Metallplatte an einem Gehäusedeckel des Zylinders befestigt. Um eine bessere seitliche Abstützung zu erhalten, ist die Metallplatte zumindest teilweise in den Gehäusedeckel des Zylinders eingelassen.

Vorzugsweise sind zwei Metallplatten ortsfest innerhalb des Zylindergehäuses angeordnet, wobei jede Metallplatte eine Endstellung des Kolbens bzw. der Kolbenstange definiert. Der axiale Abstand zwischen den beiden Metallplatten bestimmt demnach den maximalen Hub des Kolbens. Ferner ist jede Metallplatte über wenigstens eine separate Leitung an die Steuereinheit elektrisch angeschlossen. Dies ermöglicht es, zu erfassen, ob der Kolben die Metallplatte kontaktiert hat, die am vorderen Gehäusedeckel des Zylinders befestigt ist, was bedeutet, dass die Kolbenstange vollständig ausgefahren ist, oder, ob der Kolben die am rückwärtigen Gehäusedeckel befestigte Metallplatte kontaktiert hat, was wiederum signalisiert, dass die Kolbenstange ihre eingefahrene Endstellung erreicht hat.

Vorteilhafterweise ist ferner wenigstens eine Leitung zum elektrischen Anschluss des die Metallschmelze enthaltenen Behälters an die Steuereinheit vorgesehen, so dass der Kontakt der Kolbenstange oder eines Werkzeugs, das an der Kolbenstange befestigt ist, mit der Metallschmelze einen Stromkreis schließt, welcher der Steuereinheit signalisiert, dass die Kolbenstange bzw. das Werkzeug die Kruste der Metallschmelze durchbrochen hat. In Abhängigkeit vom jeweiligen Füllstand der Schmelze und/oder der Dicke der Kruste vermag die Kolbenstange oder das an der Kolbenstange befestigte Werkzeug die Kruste bereits vor Erreichen der am weitesten ausgefahrenen Endstellung zu durchbrechen. In diesem Fall wird die Kolbenstange vorzugsweise eingefahren, bevor der Kolben seine Endstellung erreicht und die am vorderen Gehäusedeckel des Zylinders befestigte Metallplatte kontaktiert hat, da die hohen Temperaturen der Schmelze die Kolbenstange als auch weitere Komponenten des Pneumatikzylinders beschädigen können.

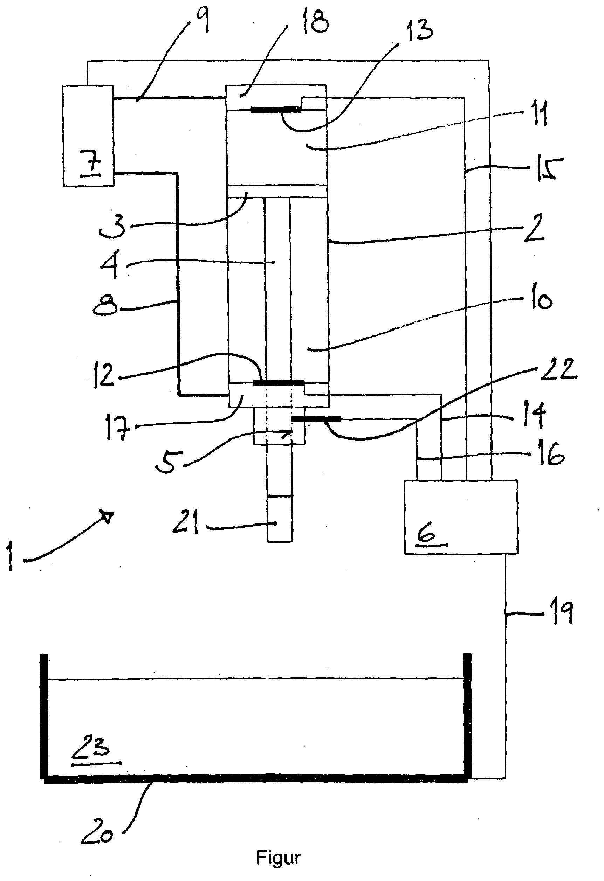

Nachfolgend wird eine bevorzugte Ausführungsform der Erfindung unter Bezugnahme auf die beigefügte Zeichnung näher beschrieben. Die einzige Figur zeigt einen schematischen Längsschnitt durch eine erfindungsgemäße Krustenbrechvorrichtung.

### Ausführliche Beschreibung der Zeichnung

Die dargestellte Krustenbrechvorrichtung umfasst einen Pneumatikzylinder 1 mit einem Zylindergehäuse 2 und einem Kolben 3, der innerhalb des Zylindergehäuses 2 axial verschiebbar ist. Eine Kolbenstange 4, die an ihrem freien Ende ein Krustenbrechwerkzeug 21 trägt, ist an dem Kolben 3 befestigt. Das Ende, welches das Werkzeug 21 trägt, ist durch eine Öffnung 5 des Zylindergehäuses 2 hindurch geführt, so dass eine axiale Verschiebung des Kolbens 3 innerhalb des Zylindergehäuses 2 eine Verschiebung der Kolbenstange 4 und des Werkzeugs 21 zwischen einer ausgefahrenen Endstellung und einer eingefahrenen Endstellung bewirkt.

Der Pneumatikzylinder 1 ist oberhalb eines Behälters 20 installiert, der eine Aluminiumschmelze enthält. Um die Kruste, die sich regelmäßig auf der Schmelze 23 bildet, zu durchbrechen, wird die Kolbenstange 4 nach unten bewegt, bis die Kolbenstange ihre ausgefahrene Endstellung erreicht hat, wobei das Werkzeug 21 die Kruste durchbricht.

Zur Betätigung des Pneumatikzylinders 1 ist eine Ventilanordnung 7 vorgesehen, die am Zylinder befestigt oder entfernt vom Zylinder angeordnet werden kann. Letzteres besitzt den Vorteil, dass der Wärmeeintrag in die Ventilanordnung 7 verringert wird. Über die Arbeitsleitungen 8, 9 ist die Ventilanordnung 7 mit einer vorderen Druckkammer 10 und einer rückwärtigen Druckkammer 11 innerhalb des Zylindergehäuses 2 verbunden. Um den Kolben 3 axial zu verschieben, beispielsweise um die Kolbenstange 4 auszufahren, wird über die Ventilanordnung 7 der rückwärtigen Druckkammer 11 des Zylinders 1 Druckluft zugeführt. Um die Kolbenstange 4 durch axiale Verschiebung des Kolbens 3 einzufahren, wird der vorderen Druckkammer 10 des Zylinders 1 Druckluft zugeführt und die rückwärtige Druckkammer 11 entlüftet.

Die Ventilanordnung 7 wird mittels einer elektronischen Steuereinheit 6 betätigt, die bevorzugt ebenfalls entfernt vom Pneumatikzylinder 1 und dem Behälter 20 angeordnet ist, um eine durch die hohen Temperaturen der Schmelze 23 hervorgerufene Beschädigung der Steuereinheit 6 zu vermeiden. Wenigstens eine Leitung ist vorgesehen, um eine Verbindung zwischen der Steuereinheit 6 und der Ventilanordnung 7 herzustellen. Die Steuereinheit 6 überwacht die Position des Kolbens 3 unter Verwendung zweier Metallplatten 12, 13, die an sich gegenüberliegenden Gehäusedeckeln 17, 18 des Zylindergehäuses 2 befestigt sind. Der Abstand zwischen den beiden Metallplatten 12, 13 legt demnach den maximalen Hub des Kolbens 3 fest, da jede der Metallplatten 12, 13 eine Endstellung des Kolbens 3 definiert. Mit Erreichen einer Endstellung schlägt der Kolben 3 an einer der beiden Metallplatten 12, 13 an und schließt dabei, aufgrund des elektrischen Anschlusses der beiden Metallplatten 12, 13 und des Kolbens 3 an die Steuereinheit 6 über separate Leitungen 14, 15, 16, einen Stromkreis. Der Stromkreis signalisiert der Steuereinheit 6, dass der Kolben 3 eine der beiden Endstellungen erreicht hat, was bedeutet, dass die Kolbenstange 4 entweder am weitesten ausgefahren oder eingefahren ist. Da sich die Signale unterscheiden, vermag die Steuereinheit 6 festzustellen, welche konkrete Endstellung erreicht wurde. Dementsprechend schaltet die Steuereinheit 6 die Ventilanordnung 7, so dass Druckluft einem bestimmten Arbeitsanschluss zugeführt wird, während der andere vorzugsweise entlüftet wird.

Der Kolben 3 und die Kolbenstange 4 der in der einzigen Zeichnung dargestellten Ausführungsform sind indirekt über das Zylindergehäuse 2 an die Steuereinheit 6 elektrisch angeschlossen, wobei das Zylindergehäuse 2 wiederum über eine Leitung 16 an die Steuereinheit 6 elektrisch angeschlossen ist. Der elektrische Kontakt zwischen dem Kolben 3 bzw. der Kolbenstange 4 und dem Zylindergehäuse 2 wird über einen Schleifkontakt 22 hergestellt. Darüber hinaus ist der Behälter 20, der die Schmelze 23 enthält, an die Steuereinheit 6 über eine Leitung 19 elektrisch angeschlossen. In dem Fall, dass die Kolbenstange 4 oder das Werkzeug 21, das an der Kolbenstange 4 befestigt ist, die Kruste an der Oberfläche der Schmelze 23 durchbricht, wird ein weiterer Stromkreis geschlossen, welcher der Steuereinheit 6 signalisiert, dass die Kruste durchbrochen ist. Da der Füllstand der Schmelze 23 und/oder die Dicke der Kruste variieren kann, ist die Kruste ggf. bereits durchbrochen, bevor der Kolben 3 bzw. die Kolbenstange 4 die ausgefahrene Endstellung erreicht hat. Um sicherzustellen, dass die hohen Temperaturen der Schmelze 23 der Kolbenstange 4 und/oder dem Werkzeug 21 keinen Schaden zufügen, schaltet die Steuereinheit 6 die Ventilanordnung 7, so dass die Kolbenstange 4 und/oder das Werkzeug 21 schnell aus der Schmelze 23 zurückgezogen werden, noch bevor der Kolben 3 die im vorderen Gehäusedeckel 17 des Zylinders eingelassene Metallplatte 12 kontaktiert hat.

Die näher beschriebene bevorzugte Ausführungsform gibt ein Beispiel einer erfindungsgemäßen Krustenbrechvorrichtung an. Die Erfindung ist jedoch nicht auf dieses konkrete Ausführungsbeispiel beschränkt. Die im Zusammenhang mit der konkreten Ausführungsform beschriebenen Vorteile werden auch durch Abwandlungen der Erfindung verwirklicht.

### Bezugszeichenliste

- 1: Pneumatikzylinder
- 2: Zylindergehäuse
- 3: Kolben
- 4: Kolbenstange
- 5: Öffnung
- 6: Steuereinheit
- 7: Ventilanordnung
- 8: Arbeitsleitung
- 9: Arbeitsleitung,
- 10: vordere Druckkammer
- 11: rückwärtige Druckkammer
- 12: Metallplatte
- 13: Metallplatte
- 14: Leitung
- 15: Leitung
- 16: Leitung
- 17: Gehäusedeckel
- 18: Gehäusedeckel
- 19: Leitung
- 20: Behälter
- 21: Werkzeug
- 22: Schleifkontakt
- 23: Schmelze

## Patentansprüche

1. Krustenbrechvorrichtung für Metallschmelzen umfassend einen Pneumatikzylinder (1) mit einem Zylindergehäuse (2), einen axial innerhalb des Zylindergehäuses (2) verschiebbaren Kolben (3), eine Kolbenstange (4), die am Kolben (3) befestigt und durch eine Öffnung (5) an einem Ende des Zylindergehäuses (2) hindurch geführt ist, so dass die Kolbenstange (4) durch axiale Verschiebung des Kolbens (3) zwischen einer eingefahrenen Endstellung und einer ausgefahrenen Endstellung bewegbar ist, weiterhin umfassend eine elektronische Steuereinheit (6) und eine Ventilanordnung (7), die über die elektronische Steuereinheit (6) betätigbar und über Arbeitsleitungen (8, 9) mit einer vorderen Druckkammer (10) und einer rückwärtigen Druckkammer (11) innerhalb des Zylindergehäusee (2) verbunden ist, **gekennzeichnet durch** wenigstens eine Metallplatte ( 12, 13), die ortsfest innerhalb des Zylindergehäuses angeordnet ist, um eine Endstellung des Kolbens (3) bzw. der Kolbenstange (4) zu definieren, wobei die Metallplatte (12, 13) und der Kolben (3) an die Steuereinheit (6) elektrisch angeschlossen sind, so dass ein Kontakt des Kolbens (3) mit der Metallplatte (12, 13) das Schließen eines Stromkreises bewirkt, welcher der Steuereinheit (8) signalisiert, dass der Kolben (3) bzw. die Kolbenstange (4) die Endstellung erreicht hat, wobei zwei Metallplatten (12, 13) ortsfest innerhalb des Zylindergehäuses (2) angeordnet sind und durch jede der Metallplatten (12, 13) eine Endstellung des Kolbens (3) bzw. der Kolbenstange (4) definiert ist.

2. Vorrichtung nach Anspruch 1, **gekennzeichnet durch** Leitungen (14, 15, 16) zum direkten oder indirekten elektrischen Anschluss der Metallplatte (12, 13) und des Kolbens ( 3) an die Steuereinheit (6) und/oder zur Signalübertragung.

3. Vorrichtung nach Anspruch 1 oder 2, **gekennzeichnet durch** wenigstens eine Leitung (16) zum direkten elektrischen Anschluss des Zylindergehäuses (2) an die Steuereinheit (6), wobei zugleich der elektrische Anschluss des Kolbens (3) und/oder der Kolbenstange (4) an die Steuereinheit (6) hergestellt wird.

4. Vorrichtung nach einem der vorhergehenden Ansprüche, **dadurch gekennzeichnet, dass** die Metallplatte (12, 13) vom Zylindergehäuses (2) elektrisch isoliert ist.

5. Vorrichtung nach einem der vorhergehenden Ansprüche, **dadurch gekennzeichnet, dass** die Metallplatte (12, 13) an einem Gehäusedeckel 17, 18) des Zylindergehäuses (2) befestigt ist und/oder die Metallplatte (12, 13) zumindest teilweise in einen Gehäusedeckel (17, 18) des Zylindergehäuses (2) eingelassen ist.

6. Vorrichtung nach einem der vorhergehenden Ansprüche, **gekennzeichnet durch** zwei Metallplatten (12 , 13), die ortsfest innerhalb des Zylindergehäuses (2) angeordnet sind, wobei jede Metallplatte (12, 13) eine Endstellung des Kolbens (3) bzw. der Kolbenstange (4) definiert und wobei jede Metallplatte (12, 13) über wenigstens eine separate Leitung ( 14 , 15) an die Steuereinheit (6) elektrisch angeschlossen ist.

7. Vorrichtung nach einem der vorhergehenden Ansprüche, **dadurch gekennzeichnet, dass** ein Behälter (20), der die Metallschmelze enthält über wenigstens eine Leitung (19) an die Steuereinheit (6) elektrisch angeschlossen ist, so dass ein Kontakt der Kolbenstange (4) bzw. eines Werkzeuges (21), das an der Kolbenstange (4) befestigt ist, mit der Metallschmelze einen Stromkreis schliesst, welcher der Steuereinheit (6) signalisiert, dass die Kolbenstange (4) bzw. das Werkzeug (21) die Kruste der Metallschmelze durchbrochen hat.

## Claims

1. Crust-breaking device for molten metals, comprising a pneumatic cylinder (1) with a cylinder housing (2), a piston (3) axially slidable within the cylinder housing (2), a piston rod (4) attached to the piston (3) and guided through an opening (5) in one end of the cylinder housing (2), and so the piston rod (4) can be moved by axial movement of the piston (3) between a retracted end position and an extended end position; further comprising an electronic control unit (6) and a valve arrangement (7) which can be actuated by the electronic control unit (6) and is connected by means of working lines (8, 9) to a front pressure chamber (10) and a rear pressure chamber (11) within the cylinder housing (2), **characterized by** at least one metal plate (12, 13) arranged immovably within the cylinder housing in order to define an end position of the piston (3) or the piston rod (4), wherein the metal plate (12, 13) and the piston (3) are electrically connected to the control unit (6), and so contact of the piston (3) with the metal plate (12, 13) effects the closing of a circuit which signals to the control unit (6) that the piston (3) or the piston rod (4) has reached the final position, wherein two metal plates (12, 13) are immovably arranged within the cylinder housing (2) and each of the metal plates (12, 13) defines an end position of the piston (3) or the piston rod (4).

2. Device according to claim 1, **characterized by** lines (14, 15, 16) for electrically connecting, directly or indirectly, the metal plate (12, 13) and the piston (3) to the control unit (6), and/or for signal transmission.

3. Device according to claim 1 or 2, **characterized by** at least one line (16) for directly electrically connecting the cylinder housing (2) to the control unit (6), wherein the connection of the piston (3) and/or the piston rod (4) to the control unit (6) is established at the same time.

4. Device according to at least one of the previous claims, **characterized in that** the metal plate (12, 13) is electrically insulated from the cylinder housing (2).

5. Device according to at least one of the previous claims, **characterized in that** the metal plate (12, 13) is fastened to a housing cover (17, 18) of the cylinder housing (2), and/or the metal plate (12, 13) is at least to some extent inset into a housing cover (17, 18) of the cylinder housing (2).

6. Device according to at least one of the previous claims, **characterized by** two metal plates (12, 13) which are immovably arranged within the cylinder housing (2), wherein each metal plate (12, 13) defines an end position of the piston (3) or the piston rod (4), and wherein each metal plate (12, 13) is electrically connected to the control unit (6) by means of at least one separate line (14, 15).

7. Device according to at least one of the previous claims, **characterized in that** a vessel (20) containing the molten metal is electrically connected to the control unit (6) by means of at least one line (19), and so contact of the piston rod (4) or a tool (21) fastened to the piston rod (4) with the molten metal closes a circuit which signals to the control unit (6) that the piston rod (4) or the tool (21) has broken through the crust of the molten metal.

## Revendications

1. Dispositif de rupture de croûte pour un bain de métal en fusion comprenant un cylindre pneumatique (1) pourvu d'un boîtier de cylindre (2), un piston (3) qui est coulissant axialement à l'intérieur du boîtier de cylindre (2), une tige de piston (4) qui est fixée sur le piston (3) et qui est guidée à travers une ouverture (5) à une extrémité du boîtier de cylindre (2), de sorte que la tige de piston (4) soit mobile par suite du déplacement axial du piston (3) entre une position terminale rentrée et une position terminale sortie, comprenant en outre une unité de commande électronique (6) et un ensemble soupape (7) qui est actionnable par l'unité de commande électronique (6) et est relié par des conduites de travail (8, 9) à une chambre de pression antérieure (10) et à une chambre de pression postérieure (11) à l'intérieur du boîtier de cylindre (2), **caractérisé par** au moins une plaque métallique (12, 13), qui est disposée de manière fixe à l'intérieur du boîtier de cylindre pour définir une position terminale du piston (3) ou de la tige de piston (4), dans lequel la plaque métallique (12, 13) et le piston (3) sont reliés électriquement à l'unité de commande (6), de sorte qu'un contact du piston (3) avec la plaque métallique (12, 13) ferme un circuit de courant, lequel signale à l'unité de commande (6) que le piston (3) ou la tige de piston (4) a atteint la position terminale, dans lequel deux plaques métalliques (12, 13) sont disposées de manière fixe à l'intérieur du boîtier de cylindre (2) et une position terminale du piston (3) ou de la tige de piston (4) est définie par chacune des plaques métalliques (12, 13).

2. Dispositif selon la revendication 1, **caractérisé par** des conduites (14, 15, 16) pour le raccordement électrique direct ou indirect de la plaque métallique (12, 13) et du piston (3) à l'unité de commande (6) et/ou pour la transmission de signal.

3. Dispositif selon la revendication 1 ou 2, **caractérisé par** au moins une conduite (16) pour le raccordement électrique direct du boîtier du cylindre (2) à l'unité de commande (6), dans lequel le raccordement électrique du piston (3) et/ou de la tige de piston (4) à l'unité de commande (6) est en même temps établi.

4. Dispositif selon l'une quelconque des revendications précédentes, **caractérisé en ce que** la plaque métallique (12, 13) est isolée électriquement du boîtier du cylindre (2).

5. Dispositif selon l'une quelconque des revendications précédentes, **caractérisé en ce que** la plaque métallique (12, 13) est fixée sur un couvercle de boîtier (17, 18) du boîtier du cylindre (2) et/ou la plaque métallique (12, 13) est au moins partiellement encastrée dans un couvercle de boîtier (17, 18) du boîtier du cylindre (2).

6. Dispositif selon l'une quelconque des revendications précédentes, **caractérisé par** deux plaques métalliques (12, 13), qui sont disposées de manière fixe à l'intérieur du boîtier de cylindre (2), dans lequel chaque plaque métallique (12, 13) définit une position terminale du piston (3) ou de la tige de piston (4) et dans lequel chaque plaque métallique (12, 13) est raccordée électriquement à l'unité de commande (6) via au moins une conduite (14, 15) distincte.

7. Dispositif selon l'une quelconque des revendications précédentes, **caractérisé en ce qu'**un réservoir (20), qui contient le bain de métal en fusion, est raccordé électriquement à l'unité de commande (6) via au moins une conduite (19), de sorte qu'un contact de la tige de piston (4) ou d'un outil (21), qui est fixé à la tige de piston (4), ferme un circuit de courant avec la fusion du métal, lequel signale à l'unité de commande (6) que la tige de piston (4) ou l'outil (21) a percé la croûte de métal en fusion.
